(19) Europäisches Patentamt

European Patent Office

Office européen des brevets

(11) **EP 1 900 927 A1**

(12) **DEMANDE DE BREVET EUROPEEN**

(43) Date de publication:
**19.03.2008  Bulletin 2008/12**

(51) Int Cl.:
*F02D 35/02* (2006.01)    *F02D 41/14* (2006.01)
*G01M 15/08* (2006.01)

(21) Numéro de dépôt: **07301313.8**

(22) Date de dépôt: **20.08.2007**

(84) Etats contractants désignés:
**AT BE BG CH CY CZ DE DK EE ES FI FR GB GR
HU IE IS IT LI LT LU LV MC MT NL PL PT RO SE
SI SK TR**
Etats d'extension désignés:
**AL BA HR MK YU**

(30) Priorité: **05.09.2006  FR 0607748**

(71) Demandeur: **Renault SAS**
**92100 Boulogne Billancourt (FR)**

(72) Inventeurs:
• **Berthe, Jena-Paul**
  **91470, Limours (FR)**
• **Emery, Pascal**
  **92400, Courbevoie (FR)**

(54) **Procédé de détermination de debut de combustion dans un moteur et véhicule mettant en oeuvre le procédé**

(57)    L'invention concerne un procédé de détermination d'un début d'une combustion dans une chambre (3) à combustion d'au moins un cylindre d'un moteur à combustion interne, le cylindre comportant un piston (5) mobile entre un point mort haut et un point mort bas, le piston (5) étant en outre relié à un vilebrequin (8) monté à rotation dans le moteur,

caractérisé en ce qu'il comporte les étapes consistant, grâce à un boîtier électronique (7), à :

a) calculer au moins deux valeurs d'une variable caractéristique de la combustion dans la chambre (3) de combustion;

b) déterminer si la deuxième valeur de la variable caractéristique dépasse un premier seuil ; et

c) déterminer si la différence entre la deuxième valeur ($C_\theta$) de la variable caractéristique et la première valeur de la variable caractéristique est inférieure à un deuxième seuil ;

le début de la combustion étant déterminé si les conditions des étapes b) et c) sont vérifiées.

L'invention concerne également un véhicule mettant en oeuvre le procédé.

FIG.1

**Description**

DOMAINE TECHNIQUE GENERAL

L'invention concerne un procédé de détermination d'un début d'une combustion dans une chambre à combustion d'au moins un cylindre d'un moteur à combustion interne, le cylindre comportant un piston mobile entre un point mort haut (PMH) et un point mort bas (PMB), le piston étant en outre relié à un vilebrequin monté à rotation dans le moteur.
L'invention concerne également un véhicule mettant en oeuvre le procédé.

ETAT DE L'ART

Les normes européennes antipollution deviennent de plus en plus sévères sur les moteurs d'automobiles. Il est important pour les constructeurs automobiles de réduire les émissions polluantes de leurs moteurs, sans négliger leur consommation en carburant et leurs performances.
Or la phase prépondérante du cycle quatre temps sur ces émissions est la phase de combustion. Il est donc important de bien connaître cette phase et ses caractéristiques.
L'une de ces caractéristiques est l'instant où débute la combustion, c'est-à-dire l'instant où les réactions chimiques irréversibles commencent, correspondant à la transformation de l'énergie chimique en énergie mécanique. Il est un paramètre d'ordre un sur le rendement de cycle thermodynamique et donc sur le couple. Il agit aussi sur le rendement de combustion.
En pratique, plutôt que de parler d'instant de début de combustion, on parle d'angle de début de combustion. En effet, plutôt que de prendre le temps comme repère, on préfère prendre l'angle du vilebrequin. Le zéro du repère est par exemple pris à la position où le piston est au « point mort haut » (PMH). Sur un moteur fonctionnant correctement, le début de combustion se situe au voisinage du PMH, donc ainsi au voisinage de 0° vilebrequin. C'est ce repère et cette origine que nous prendrons dans la suite de ce document.
Aujourd'hui, le début de combustion est rarement estimé en ligne sur un moteur implanté dans un véhicule. Lorsque cette détection est effectuée, elle l'est grâce à des méthodes numériques basées sur des principes thermodynamiques ou de traitement numérique du signal, difficiles à mettre en oeuvre.
WO 02/48522 A1 divulgue un procédé de détermination de début de combustion (« Start Of Combustion » ou SOC selon la terminologie anglo-saxonne généralement utilisé par l'homme du métier) qui utilise la dérivée de la pression de combustion pour détecter le SOC, par comparaison à un seuil.
C'est une méthode simple, mais peu robuste. L'angle de début de combustion (SOC) est difficilement identifiable à l'aide de cette méthode.
En effet, la dérivée de la pression comporte un pic représentatif de la brusque élévation de pression, trahissant le début de la combustion. Il est alors possible par l'application d'une valeur seuil de détecter un instant représentatif du commencement de la phase de combustion.
Cependant, l'application d'une valeur de seuil est rendue difficile par plusieurs phénomènes.
Tout d'abord, l'opération de dérivation du signal de pression entraîne l'amplification du bruit de mesure. Ce bruit est présent sur le signal pendant toute la phase de compression et contraint le choix de la valeur de seuil.
En outre, l'élévation rapide de la pression due à la simple compression des gaz enfermés dans la chambre de combustion engendre une valeur de dérivée non négligeable, et impose des contraintes supplémentaires sur le choix de la valeur de seuil.
Enfin, cette élévation normale de la pression pendant la phase de compression dépend du point de fonctionnement du moteur (pression et température des gaz admis, température des parois de la chambre, masse admise, etc.). De ce fait, lors de combustions peu vives, le pic de la dérivée dû à la combustion peut être inférieur au pic de la dérivée dû à la compression.
Un autre procédé possible consiste à étudier le comportement de la dérivée seconde de la pression cylindre pendant la phase de combustion. Cependant, la double dérivation engendre un niveau de bruit sur le signal très important.
US 5 359 883 divulgue un autre procédé, s'appuyant quant à lui sur le calcul du rapport des fonctions logarithmes de pression et de volume. Le calcul de ce rapport permet de détecter un changement de comportement du coefficient polytropique $\gamma$. Ce coefficient est à peu près constant pendant la phase de compression du cycle thermodynamique du moteur. Puis, pendant la phase de combustion, le comportement du coefficient polytropique change, ce qui se traduit par un changement de pente du tracé du cycle. Cette rupture de pente peut être détectée par exemple en appliquant un seuil sur la grandeur :

$$\frac{d}{dt}\left(\frac{\log p}{\log V}\right)$$

Cependant, l'opération engendre aussi un bruit de mesure important.

US 2003/0145829 divulgue un procédé selon lequel on propose de détecter le commencement de la phase de combustion en étudiant le profil de la pression de cylindre, auquel il est appliqué une transformation en ondelettes.

Ce procédé est particulièrement lourd à mettre en oeuvre et nécessite un temps de calcul élevé, ce qui rend très difficile son utilisation à bord d'un véhicule.

D'autres méthodes détectent le début de combustion, non pas à l'aide d'un capteur de pression mais grâce à un accéléromètre, comme par exemple dans WO 02/25237.

Ces méthodes ne sont pas robustes ni précises, et nécessitent un traitement de signal complexe. En effet, un accéléromètre placé sur le moteur capte toute sorte de signaux parasites (les ouvertures et fermetures de soupapes par exemple).

PRESENTATION DE L'INVENTION

L'invention propose de pallier au moins un des inconvénients précités.

A cet effet, on propose selon l'invention un procédé de détermination d'un début d'une combustion dans une chambre à combustion d'au moins un cylindre d'un moteur à combustion interne, le cylindre comportant un piston mobile entre un point mort haut (PMH) et un point mort bas (PMB), le piston étant en outre relié à un vilebrequin monté à rotation dans le moteur,

caractérisé en ce qu'il comporte les étapes consistant, grâce à un boîtier électronique, à :

a) calculer au moins deux valeurs d'une variable ($C_\theta$, $C_{\theta-\Delta\theta}$) caractéristique de la combustion dans la chambre (3) de combustion, la variable caractéristique étant notamment une fonction de l'énergie dégagée dans la chambre, une première valeur ($C_{\theta-\Delta\theta}$) étant calculée pour un premier angle ($\theta-\Delta\theta$) de rotation du vilebrequin ou un premier instant ($t-\Delta t$), une deuxième valeur ($C_\theta$) étant calculée pour un deuxième angle de rotation ($\theta$) du vilebrequin ou un deuxième instant (t);
b) déterminer si la deuxième valeur ($C_\theta$) de la variable caractéristique dépasse un premier seuil (S1) ; et
c) déterminer si la différence entre la deuxième valeur ($C_\theta$) de la variable caractéristique et la première valeur ($C_{\theta-\Delta\theta}$) de la variable caractéristique est inférieure à un deuxième seuil (S2),

le début de la combustion étant déterminé si les conditions des étapes b) et c) sont vérifiées.

L'invention est avantageusement complétée par les caractéristiques suivantes, prises seules ou en une quelconque combinaison techniquement possible :

- le deuxième angle ($\theta$) ou le deuxième instant (t) est proche du premier angle ($\theta-\Delta\theta$) ou du premier instant ($t-\Delta t$);
- le calcul de la variable caractéristique C est effectué par:

$$C = \frac{1}{F}\frac{dQ}{d\theta}$$

où Q est l'énergie dans la chambre,
$\theta$ est l'angle du vilebrequin, et
F est une fonction de $\theta$ telle que F est maximale au point mort bas, minimale au point mort haut, monotone entre les deux, et toujours strictement positive ;
- la fonction F est donnée par :

$$F(\theta) = F_0 + K.\left|\theta\right|$$

où K et $F_0$ sont des constantes ;
- le calcul de la variable caractéristique C est effectué par :

$$C = \frac{1}{V}\frac{dQ}{d\theta}$$

où V représente le volume de la chambre pour une valeur $\theta$ de l'angle,
Q est l'énergie dans la chambre, et
$\theta$ est l'angle du vilebrequin ;

- on a :

$$\frac{dQ}{d\theta} = \frac{1}{\gamma-1}V\left(\frac{p}{m}\frac{dm}{d\theta} + \frac{p}{T}\frac{dT}{d\theta} - \frac{p}{V}\frac{dV}{d\theta}\right) + \frac{\gamma}{\gamma-1}p\frac{dV}{d\theta}$$

Avec :

Q la quantité d'énergie présente dans les gaz de la chambre de combustion ;
$\theta$ l'angle du vilebrequin ;
$\gamma$ le rapport des chaleurs spécifiques ($c_p$ et $c_v$);
V le volume de la chambre de combustion ;
p la pression dans la chambre de combustion;
m la masse de gaz enfermés dans la chambre; et
T la température dans la chambre de combustion;

- on a:

$$\frac{dQ}{d\theta} = \frac{V}{\gamma-1}\left(\frac{p}{T}\frac{dT}{d\theta}\right) + p\frac{dV}{d\theta}$$

Avec :

Q la quantité d'énergie présente dans les gaz de la chambre de combustion ;
$\theta$ l'angle du vilebrequin ;
$\gamma$ le rapport des chaleurs spécifiques ($c_p$ et $c_v$);
V le volume de la chambre de combustion ;
p la pression dans la chambre de combustion ; et
T la température dans la chambre de combustion ;

$$T_\theta = T_0 \frac{p_\theta V_\theta}{p_0 V_0}$$

avec $T_0$, $p_0$, $V_0$ les température, pression et volume initiaux ;

$$T_\theta = T_{\theta-\Delta\theta}\left(\frac{1}{\dfrac{p_{\theta-\Delta\theta}}{p_\theta} + \dfrac{V_{\theta-\Delta\theta}}{V_\theta} - 1}\right) ;$$

$$C_\theta = \frac{1}{\gamma - 1}\left( \frac{p_\theta}{T_\theta} \frac{T_\theta - T_{\theta - \Delta\theta}}{\Delta\theta} \right) + \frac{p_\theta}{V_\theta} \frac{V_\theta - V_{\theta - \Delta\theta}}{\Delta\theta} \;;$$

- le volume est tiré d'une table de valeurs donnant le volume $V$ et sa dérivée temporelle pour chaque valeur d'angle du vilebrequin ;
- le calcul du volume vrai V est remplacé par une approximation $V_p$ suivant une loi parabolique donnée par l'expression :

$$V_p(\theta) = V_0 + K_p\theta^2$$

où :

$V_0$ est constant et est le volume de la chambre au point mort haut (PMH),

$K_p$ un coefficient à ajuster de telle façon que la courbe de $V_p$ soit au plus près de la courbe de V au voisinage du point mort haut ;
- le premier seuil (S1) et le deuxième seuil (S2) sont fixes ou issus d'une cartographie fonction de la charge du moteur ou de la quantité de carburant injectée ;
- le procédé comporte, dans le cas d'un moteur à au moins deux injections de quantités injectées différentes dans la chambre, une étape consistant à détecter séparément le début de combustion de chacune des injections ;
- la détection de chaque début de combustion s'effectue en multipliant les détections et en appliquant des seuils différents chaque détection ;
- la détection de chaque début de combustion s'effectue en multipliant les détections, et en déterminant si la différence entre la deuxième valeur ($C_\theta$) de la variable caractéristique et la première valeur ($C_{\theta-\Delta\theta}$) de la variable caractéristique pour l'injection de plus grande quantité est supérieure à un deuxième seuil (S2) ;
- le deuxième seuil (S2) est identique pour chaque détection ; et
- la détection de chaque début de combustion s'effectue en appliquant deux seuils pour l'injection de plus faible quantité, et un seuil unique à l'injection de plus grande quantité.

L'invention concerne également un véhicule mettant en oeuvre le procédé.

L'invention présente de nombreux avantages.

Elle permet l'estimation en temps réel, sur un moteur essence ou Diesel, de début de combustion (SOC) et notamment de l'angle de début de combustion.

L'invention a une meilleure robustesse et une meilleure précision de détection.

L'invention est simple à mettre en oeuvre.

Une détermination précise du début de combustion présente elle aussi des avantages.

En effet, la détection de début de combustion peut servir à des stratégies d'estimation ou de régulation du bruit, d'optimisation du couple par régulation du placement de la combustion dans le cycle thermodynamique d'un moteur, de recalage de la caractéristique des injecteurs pour ajuster les quantités injectées. Cette détection peut entrer dans la composition de système d'aide à la mise au point des moteurs sur bancs, mais il sera surtout très utile dans les systèmes de contrôle moteur embarqués.

Concernant les stratégies d'estimation ou de régulation du bruit, l'invention est particulièrement utile et avantageuse, car elle résout le problème du fenêtrage, surtout lors d'une combustion homogène (moteurs dits HCCI). En effet, les systèmes de mesure du bruit de combustion basés sur l'observation de la dérivée de la pression dans la chambre (divulgué par exemple dans FR 2 857 410) sont contraints d'observer la pression dans une fenêtre temporelle ouverte au moment de l'injection de carburant, afin de ne pas confondre le gradient de pression dû à la combustion avec le gradient de pression naturel dû à la compression du gaz dans la chambre. Ils ne sont pas utilisables sur des moteurs HCCI car dans ce type de moteur, l'injection est très précoce dans le cycle thermodynamique et ne peut pas servir à déclencher l'ouverture de cette fenêtre d'observation.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 représente schématiquement un moteur d'un véhicule mettant en oeuvre l'invention;
- la figure 2 représente schématiquement les étapes principales d'un procédé selon l'invention pour calculer le début de la combustion, et par conséquent l'état de la combustion dans une chambre de combustion ;

- la figure 3 représente une fonction triangle ;
- la figure 4 représente schématiquement l'effet d'une fonction selon la figure 3 dans le calcul d'une variable caractéristique selon l'invention ;
- la figure 5 représente schématiquement l'effet d'une fonction en 1/V dans le calcul de la variable caractéristique selon l'invention ;
- la figure 6 représente un exemple d'approximation du volume d'une chambre de combustion ;
- les figures 7 et 8 représentent schématiquement l'effet d'une fonction selon la figure 6 dans le calcul d'une variable caractéristique selon l'invention par rapport à un calcul effectué avec un vrai volume ;
- la figure 9 représente schématiquement les étapes principales d'un procédé selon l'invention pour calculer le début de la combustion avec des approximations avantageuses ;
- la figure 10 représente schématiquement un montage logique mettant en oeuvre l'invention ; et
- la figure 11 représente schématiquement une mise en oeuvre de l'invention avec au moins deux injections de quantités différentes.

Sur l'ensemble des figures, les éléments similaires portent des références numériques identiques.

DESCRIPTION DETAILLEE

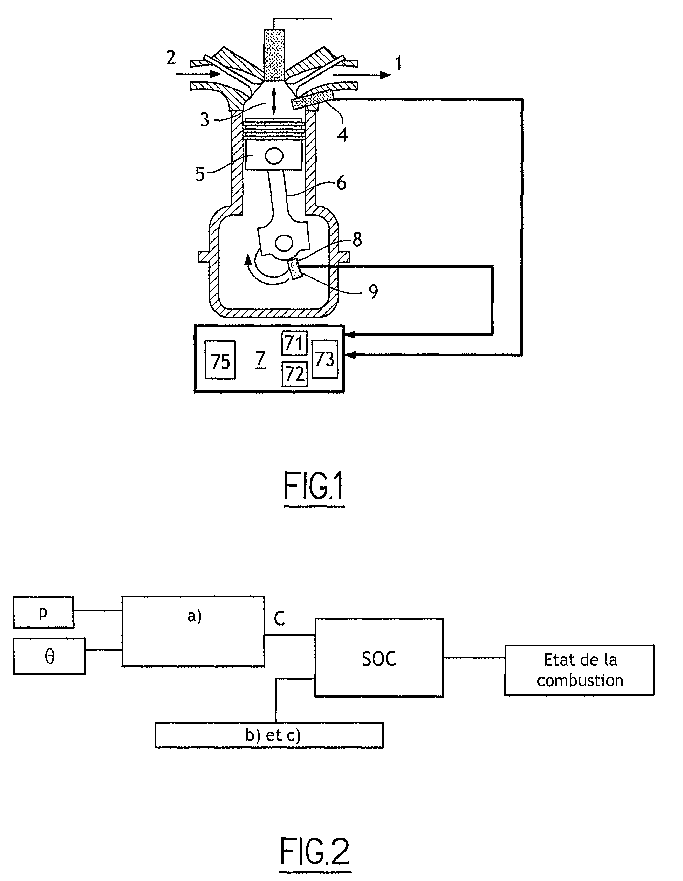

La figure 1 représente schématiquement un moteur d'un véhicule mettant en oeuvre l'invention. Le moteur à combustion interne est du type Diesel ou essence.
Le moteur comporte au moins un cylindre et un vilebrequin 8 monté à rotation dans le moteur.
Le cylindre comporte une chambre de combustion 3 et un piston 5.
La chambre 3 de combustion est comprise dans la partie haute du cylindre, dans un espace compris entre le piston 5, un dispositif 2 d'admission de gaz et un dispositif 1 d'échappement de gaz.
Le piston 5 est relié au vilebrequin 8 par une bielle 6, et est mobile entre un point mort haut (PMH) et un point mort bas (PMB).
Le moteur comporte en outre un détecteur 9 de l'angle du vilebrequin 8 et un capteur 4 de la pression dans la chambre 3 de combustion.
Le véhicule comporte de plus un boîtier électronique 7 de commande du système.
Le boîtier 7 comporte un calculateur 71, un différenciateur 74, deux comparateurs 72 et 73 et une porte logique ET (AND) 75.
La figure 2 représente schématiquement les étapes principales d'un exemple d'un procédé selon l'invention pour calculer le début de la combustion, et par conséquent l'état de la combustion dans une chambre de combustion.
Le principe d'un procédé est l'analyse d'une variable calculée C, image de la combustion, au moyen de critères de discrimination.
A partir de la valeur de pression p régnant dans la chambre 3 de combustion, et de la valeur θ de la position du vilebrequin 8, on calcule en permanence des valeurs d'une variable C (étape a)), C qui est le plus souvent basée sur le dégagement d'énergie dans la chambre $\dfrac{dQ}{d\theta}$ .

Ces valeurs sont analysées en permanence, pour un angle θ compris entre -180° et +180°, ou dans un intervalle plus réduit (étapes b) et c)).
Tant que certaines conditions ne sont pas remplies, on estime que la combustion n'a pas commencé. Dès qu'elles le sont, on estime que la combustion vient de débuter, et on repère la valeur de l'angle vilebrequin. On connaît donc l'instant de début de combustion.
Ainsi, un procédé selon l'invention comporte les étapes consistant à, grâce au boîtier électronique 7, à :

a) calculer au moins deux valeurs $C_\theta$ et $C_{\theta-\Delta\theta}$ de la variable C caractéristique de la combustion dans la chambre 3 de combustion, une première valeur $C_{\theta-\Delta\theta}$ étant calculée pour un premier angle θ-Δθ de rotation du vilebrequin 8 ou un premier instant t-Δt, une deuxième valeur $C_\theta$ étant calculée pour un deuxième angle de rotation θ du vilebrequin 8 ou un deuxième instant t ;
b) déterminer si la deuxième valeur $C_\theta$ de la variable C caractéristique dépasse un premier seuil S1 ; et
c) déterminer si la différence entre la deuxième valeur $C_\theta$ de la variable C caractéristique et la première valeur $C_{\theta-\Delta\theta}$ de la variable C caractéristique est inférieure à un deuxième seuil S2,

le début de la combustion étant déterminé si les conditions des étapes b) et c) sont vérifiées.

Bien entendu, le deuxième angle θ ou le deuxième instant t est proche du premier angle θ-Δθ ou du premier instant t-Δt (par exemple, le deuxième angle est séparé du premier angle de 1° ou moins).

PREMIER MODE DE MISE EN OEUVRE

Le calcul de la variable caractéristique C peut être effectué par l'expression :

$$C = \frac{1}{F}\frac{dQ}{d\theta}$$

où Q est l'énergie dans la chambre,
θ est l'angle du vilebrequin, et
F est une fonction de θ telle que F est maximale au point mort bas, minimale au point mort haut, monotone entre les deux, et toujours strictement positive.
Une fonction F "triangle" possède de telles propriétés, et peut être réalisée très simplement. Il suffit de faire :

$$F = F_0 + K.\left|\theta\right|$$

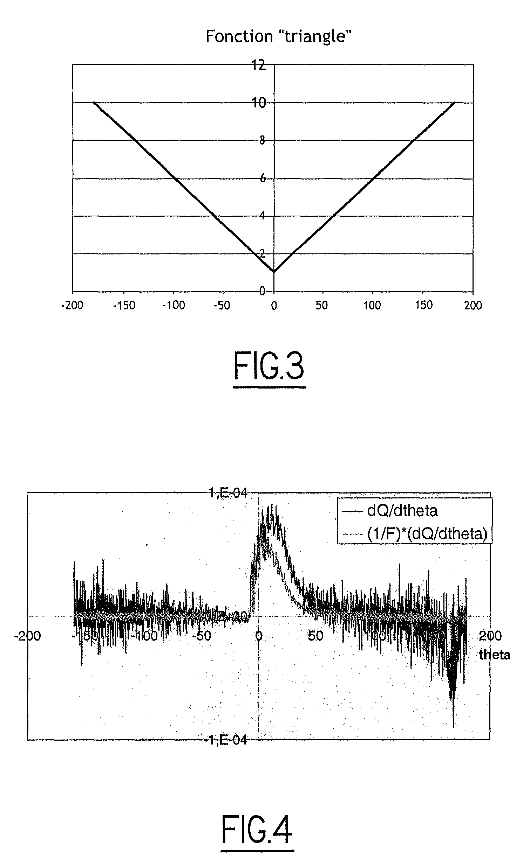

où K et $F_0$ sont des constantes, comme cela est représenté à la figure 3.

En pratique, le calcul du dégagement d'énergie $\dfrac{dQ}{d\theta}$ donne une information bruitée. L'effet d'une telle fonction F est d'atténuer le signal de dégagement d'énergie dans les zones où il est le plus bruité (du coté du PMB), par rapport aux zones où il est susceptible de contenir l'information qui nous intéresse (du coté du PMH), comme on le voit sur la figure 4.
Cette opération augmente donc le rapport signal sur bruit et diminue les contraintes sur le filtrage de la pression à mettre en place.

DEUXIEME MODE DE MISE EN OEUVRE

Le calcul de la variable caractéristique C peut également être effectué par :

$$C = \frac{1}{V}\frac{dQ}{d\theta}$$

où V représente le volume de la chambre pour une valeur θ de l'angle,
Q es l'énergie dans la chambre, et
θ est l'angle du vilebrequin.

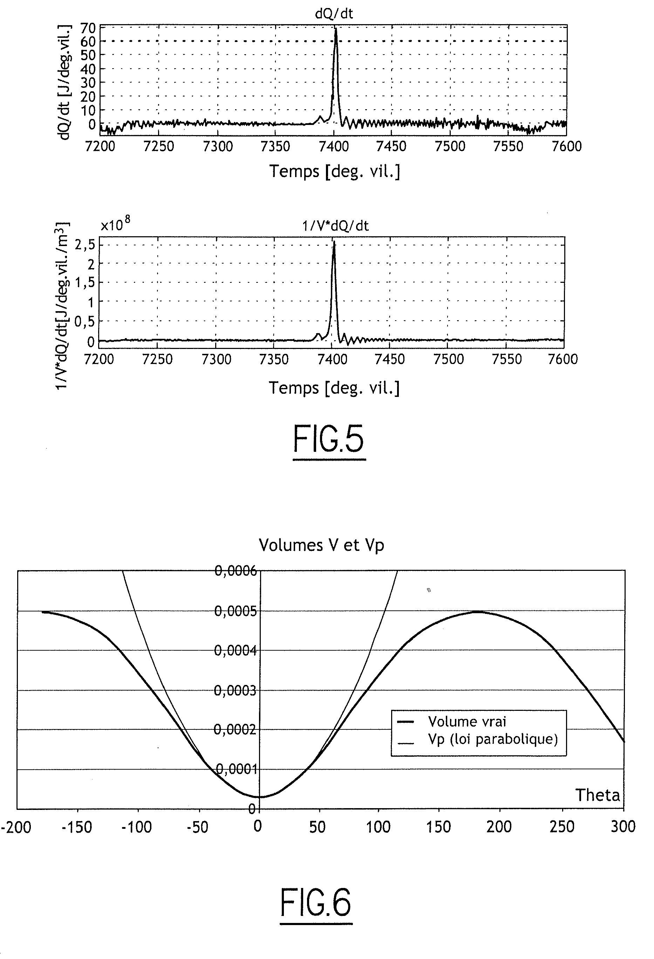

Comme le volume varie cycliquement avec θ, la multiplication par $\dfrac{1}{V}$ a pour avantage de diminuer l'amplitude du bruit sur le dégagement d'énergie, là où il est le plus fort (vers les points morts bas). Ce calcul amplifie aussi le signal là ou il est utile pour la détection du SOC (au point mort haut). Cette opération augmente le rapport signal sur bruit et diminue les contraintes sur le filtrage de la pression à mettre en place, comme le montre la figure 5.

En pratique, le calcul de $\dfrac{dQ}{d\theta}$ est complexe et nécessite trop de puissance de calcul pour être réalisé tel quel dans un système électronique embarqué de contrôle moteur.
Mais la division par le volume est intéressante car elle permet de réaliser des simplifications.
Dans un premier temps, on peut prendre :

$$\frac{dQ}{d\theta} = \frac{1}{\gamma - 1} V \left( \frac{p}{m} \frac{dm}{d\theta} + \frac{p}{T} \frac{dT}{d\theta} - \frac{p}{V} \frac{dV}{d\theta} \right) + \frac{\gamma}{\gamma - 1} p \frac{dV}{d\theta}$$

Avec :

Q la quantité d'énergie présente dans les gaz de la chambre de combustion ;
$\theta$ l'angle du vilebrequin ;
$\gamma$ le rapport des chaleurs spécifiques ($c_p$ et $c_v$);
V le volume de la chambre de combustion ;
p la pression dans la chambre de combustion;
m la masse de gaz enfermés dans la chambre; et
T la température dans la chambre de combustion.

Notons que l'expression pourrait être écrite en remplaçant $\theta$ par le temps t. on a alors:

$$d\theta = \omega \, dt.$$

Cependant il est plus intéressant d'utiliser l'angle $\theta$ car le calcul devient alors indépendant de la vitesse de rotation $\omega$ du moteur.

De plus, l'expression $\dfrac{dQ}{d\theta}$ prise comme point de départ est celle faisant intervenir la dérivée angulaire de la température et non pas la dérivée de la pression. Ceci encore une fois par souci de minimisation du bruit, car la dérivée de la pression introduit un bruit important dans le résultat.

En toute rigueur, V, p, T, $\gamma$, m, sont des grandeurs variables en fonction de l'angle $\theta$, et seuls la pression p et l'angle $\theta$ sont des valeurs mesurées par le moteur. Il faut donc définir ou estimer V, T, $\gamma$, m.

Concernant la masse m, nous faisons ici l'hypothèse qu'elle est constante (masse injectée négligée).

On peut alors considérer que

$$\frac{dQ}{d\theta} = \frac{V}{\gamma - 1} \left( \frac{p}{T} \frac{dT}{d\theta} \right) + p \frac{dV}{d\theta}$$

Avec :

Q la quantité d'énergie présente dans les gaz de la chambre de combustion ;
$\theta$ l'angle du vilebrequin;
$\gamma$ le rapport des chaleurs spécifiques ($c_p$ et $c_v$);
V le volume de la chambre de combustion ;
p la pression dans la chambre de combustion ; et
T la température dans la chambre de combustion.

Concernant le rapport des chaleurs spécifiques $\gamma$, nous considérons qu'il est constant avant la combustion, et qu'il le reste encore dans les premiers instants de la combustion. Nous le prenons par exemple égal à 1,4.

Pour une géométrie donnée d'un moteur, il y a une relation immuable entre le volume V et l'angle $\theta$.

Calculer en permanence ce volume V d'après $\theta$ n'est pas envisageable dans un système de contrôle moteur embarqué car l'expression de V est trop complexe.

A la place, pour estimer le volume V et sa dérivée $\dfrac{dV}{d\theta}$, il est possible d'utiliser une table de valeurs donnant le volume V pour chaque valeur de $\theta$.

Pour estimer la température T et sa dérivée $\dfrac{dT}{d\theta}$, il existe plusieurs méthodes.

Une première méthode préférée utilise la loi des gaz parfaits pour écrire :

$$\frac{pV}{T} = mr = \text{constante.}$$

Donc à deux instants ou deux angles différents :

$$\frac{p_\theta V_\theta}{T_\theta} = \frac{p_0 V_0}{T_0}$$

On en déduit :

$$T_\theta = T_0 \frac{p_\theta V_\theta}{p_0 V_0}$$

avec :

$T_0, p_0, V_0$ : température, pression et volume initiaux
$T_\theta, p_\theta, V_\theta$: température, pression et volume à l'angle θ

La température est donc estimée pour chaque valeur de l'angle θ, à partir de conditions initiales de pression, température et volume en début de cycle, de préférence juste après la fermeture de la soupape d'admission. On peut prendre la température initiale constante et égale à 300K, ou bien la faire dépendre de la température d'air admis, si on la mesure.

Cette méthode est préférée sur la suivante, car elle nécessite moins de calculs:

$\dfrac{T_0}{p_0 V_0}$ n'est calculé qu'une seule fois par cycle et il suffit de multiplier ce résultat par $p_\theta V_\theta$ à chaque nouvelle valeur de l'angle θ.

On expose ici une deuxième méthode pour estimer la température T et sa dérivée $\dfrac{dT}{d\theta}$.

Toujours en supposant le gaz parfait (pV = mrT, où mr est contant), on peut écrire :

$$\frac{1}{T}\frac{dT}{d\theta} = \frac{1}{p}\frac{dp}{d\theta} + \frac{1}{V}\frac{dV}{d\theta}$$

On pourrait réintroduire cette expression dans l'expression de C, mais cela ferait réapparaître la dérivée de la pression $\dfrac{dp}{d\theta}$, qui est une source de bruit pour le calcul. Il est donc préférable de trouver un autre moyen pour exprimer

$$\frac{1}{T}\frac{dT}{d\theta}$$

Pour cela, on discrétise l'expression, et on considère les valeurs prises par V, p, T aux angles θ et θ-Δθ , où Δθ est constant et représente le pas de calcul. L'expression devient :

$$\frac{1}{T_\theta}\frac{T_\theta - T_{\theta-\Delta\theta}}{\Delta\theta} = \frac{1}{p_\theta}\frac{p_\theta - p_{\theta-\Delta\theta}}{\Delta\theta} + \frac{1}{V_\theta}\frac{V_\theta - V_{\theta-\Delta\theta}}{\Delta\theta}$$

On en tire une expression de la température T à l'angle θ en fonction de celle à l'angle θ - Δθ:

$$T_\theta = T_{\theta-\Delta\theta}\left(\frac{1}{\dfrac{p_{\theta-\Delta\theta}}{p_\theta} + \dfrac{V_{\theta-\Delta\theta}}{V_\theta} - 1}\right)$$

La température est donc estimée de manière récursive pour chaque valeur de l'angle θ, à partir d'une température initiale correspondant à la température dans le cylindre à l'instant de la fermeture de la soupape d'admission. On peut la prendre constante et égale à 300K, ou bien la faire dépendre de la température d'air admis, si on la mesure.

Pour terminer, l'expression de C est également discrétisée, et la valeur de C pour chaque valeur de θ est donnée par la formule :

$$C_\theta = \frac{1}{\gamma-1}\left(\frac{p_\theta}{T_\theta}\frac{T_\theta - T_{\theta-\Delta\theta}}{\Delta\theta}\right) + \frac{p_\theta}{V_\theta}\frac{V_\theta - V_{\theta-\Delta\theta}}{\Delta\theta}$$

Il est possible d'aller encore plus loin dans la simplification du calcul de C, en optant pour une simplification de la détermination du volume $V_\theta$.

En effet, comme il est dit plus haut, la loi de volume V, qui est immuable pour une géométrie de moteur donnée, peut être déterminée par une table de valeur, associant à chaque valeur de θ une valeur de volume.

Dans un système embarqué, il est cependant intéressant de diminuer la taille des tables de valeurs car ceci consomme des ressources de mémoire. La simplification exposée ici va permettre de s'affranchir de tables de valeurs en mémoire.

Plutôt que d'utiliser le volume vrai dans les calculs exposés précédemment, on lui substituera une loi parabolique Vp donnée par l'expression. $V_p = V_0 + K_p\theta^2$ où :

V$_0$ est constant et est le volume au point mort haut (volume mort),

Kp un coefficient à ajuster de telle façon que la courbe de Vp soit au plus près de la courbe de V au voisinage du PMH.

Un tel exemple de courbe est représenté à la 6.

Vp sera partout substitué à V dans les calculs exposés précédemment : pour le calcul des températures $T_\theta$ et $T_{\theta-\Delta\theta}$, et dans le terme $\dfrac{p_\theta}{V_\theta}\dfrac{V_\theta - V_{\theta-\Delta\theta}}{\Delta\theta}$.

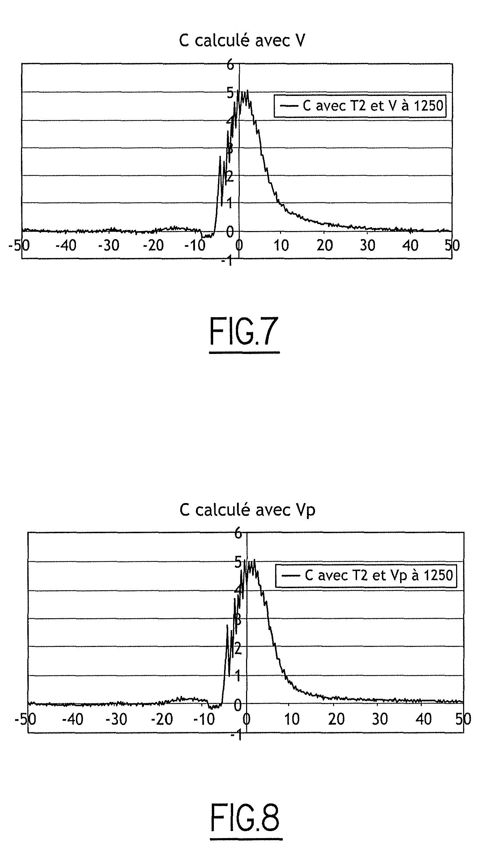

Bien que Vp soit très éloigné de V en dehors de la zone du PMH, on peut démontrer que l'influence sur le résultat est minime. En pratique l'erreur est très peu perceptible, comme on le voit sur les figures 7 et 8.

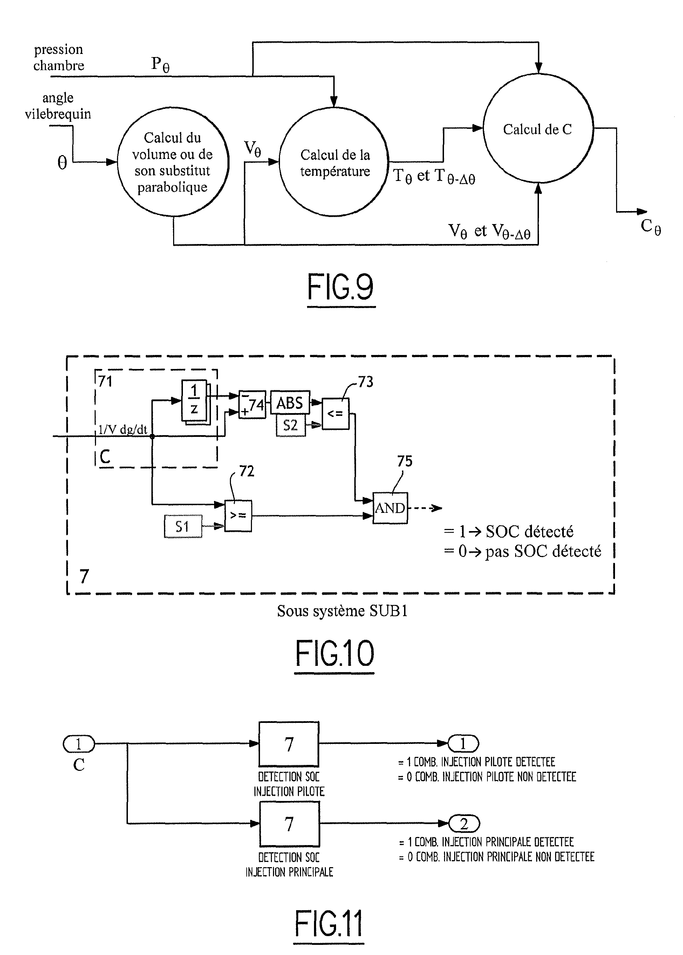

La figure 9 montre une synthèse des principales étapes d'un procédé selon l'invention.

A partir de l'angle du vilebrequin 8 donné par le détecteur 9, le boîtier 7 peut calculer le volume de la chambre 3, ou de son substitut parabolique, à au moins deux valeurs de l'angle du vilebrequin (ou à deux instants).

La valeur du volume, et la valeur de la pression dans la chambre de combustion donnée par le capteur 4 permettent au boîtier 7 de mesure la température dans la chambre de combustion, à au moins deux valeurs de l'angle du vilebrequin (ou à deux instants).

Le volume, la pression et la température permettent au boîtier 7 de calculer la valeur de C, à au moins deux valeurs de l'angle du vilebrequin (ou à deux instants).

La figure 10 représente schématiquement un montage logique permettant de mettre en oeuvre un procédé selon l'invention.

Le boîtier 7 comporte ainsi un calculateur 71 calculant au moins deux valeurs $C_\theta$ et $C_{\theta-\Delta\theta}$ de la variable C caractéristique.

La deuxième valeur $C_\theta$ de la variable caractéristique est envoyée à un comparateur 72 qui détermine si la variable caractéristique dépasse un premier seuil S1.

Un différenciateur 74 calcule la différence entre la deuxième valeur $C_\theta$ de la variable caractéristique et la première valeur $C_{\theta-\Delta\theta}$ de la variable caractéristique.

La différence est envoyée à un comparateur 73 qui détermine si la différence est inférieure à un deuxième seuil S2.

La porte logique ET (AND en anglais) 75 détermine si les deux conditions des comparateurs 72 et 73 sont vérifiées.

Si c'est le cas, le début de la combustion est déterminé.

Le différenciateur 74 calcule de préférence la valeur absolue de la différence.

Les deux seuils ont pour effet d'éviter les fausses détections dues au bruit de mesure. Ce bruit a pour caractéristique une forte variation en amplitude d'une valeur de $C_\theta$, à sa suivante.

Les seuils S1 et S2 peuvent être fixes ou issus d'une cartographie en fonction de la charge moteur (ou quantité de carburant injectée) par exemple.

Lors de fortes injections, on sait que l'amplitude de C va être importante, il est alors judicieux d'augmenter S1 pour diminuer le risque de fausses détections dû au bruit de mesure. Dans ce cas là, il est aussi nécessaire d'augmenter S2 car l'amplitude de variation sur un $\Delta\theta$ est plus importante.

La figure 11 montre que dans le cas d'un moteur à au moins deux injections de quantités injectées différentes dans la chambre (par exemple une injection pilote de plus faible quantité et une injection principale de plus forte quantité), un procédé selon l'invention comporte une étape consistant à détecter séparément le début de combustion de chacune des injections.

Une première possibilité est alors d'effectuer la détection de chaque début de combustion en multipliant les détections et en appliquant des seuils différents chaque détection.

Une autre possibilité est d'effectuer la détection de chaque début de combustion en multipliant les détections, et en déterminant si la différence entre la deuxième valeur $C_\theta$ de la variable caractéristique et la première valeur $C_{\theta-\Delta\theta}$ de la variable caractéristique pour l'injection de plus grande quantité est supérieure à un deuxième seuil S2. Ceci a pour avantage d'éviter que la détection de la combustion principale ne détecte la combustion de l'injection pilote.

Dans ce cas, le deuxième seuil S2 est identique pour chaque détection.

Une autre possibilité est que la détection de chaque début de combustion s'effectue en appliquant deux seuils pour l'injection de plus faible quantité, et un seuil unique à l'injection de plus grande quantité.

## Revendications

1. Procédé de détermination d'un début d'une combustion dans une chambre (3) à combustion d'au moins un cylindre d'un moteur à combustion interne, le cylindre comportant un piston (5) mobile entre un point mort haut (PMH) et un point mort bas (PMB), le piston (5) étant en outre relié à un vilebrequin (8) monté à rotation dans le moteur, **caractérisé en ce qu'**il comporte les étapes consistant, grâce à un boîtier électronique (7), à :

   a) calculer au moins deux valeurs d'une variable ($C_\theta$, $C_{\theta-\Delta\theta}$) caractéristique de la combustion dans la chambre (3) de combustion, la variable caractéristique étant notamment une fonction de l'énergie dégagée dans la chambre (3), une première valeur ($C_{\theta-\Delta\theta}$) étant calculée pour un premier angle ($\theta-\Delta\theta$) de rotation du vilebrequin (8) ou un premier instant (t-$\Delta$t), une deuxième valeur ($C_\theta$) étant calculée pour un deuxième angle de rotation ($\theta$) du vilebrequin (8) ou un deuxième instant (t);
   b) déterminer si la deuxième valeur ($C_\theta$) de la variable caractéristique dépasse un premier seuil (S1) ; et
   c) déterminer si la différence entre la deuxième valeur ($C_\theta$) de la variable caractéristique et la première valeur ($C_{\theta-\Delta\theta}$) de la variable caractéristique est inférieure à un deuxième seuil (S2),

   le début de la combustion étant déterminé si les conditions des étapes b) et c) sont vérifiées.

**2.** Procédé selon la revendication 1, dans lequel le deuxième angle (θ) ou le deuxième instant (t) est proche du premier angle (θ-Δθ) ou du premier instant (t-Δt).

**3.** Procédé selon l'une des revendications 1 ou 2, dans lequel le calcul de la variable caractéristique C est effectué par :

$$C = \frac{1}{F}\frac{dQ}{d\theta}$$

où Q est l'énergie dans la chambre,
θ est l'angle du vilebrequin, et
F est une fonction de θ telle que F est maximale au point mort bas, minimale au point mort haut, monotone entre les deux, et toujours strictement positive.

**4.** Véhicule selon la revendication 3, dans lequel la fonction F est donnée par :

$$F(\theta) = F_0 + K.|\theta|$$

où K et $F_0$ sont des constantes.

**5.** Procédé selon l'une des revendications 1 ou 2, dans lequel le calcul de la variable caractéristique C est effectué par :

$$C = \frac{1}{V}\frac{dQ}{d\theta}$$

où V représente le volume de la chambre pour une valeur θ de l'angle,
Q est l'énergie dans la chambre, et
θ est l'angle du vilebrequin.

**6.** Procédé selon la revendication 5, dans lequel on a :

$$\frac{dQ}{d\theta} = \frac{1}{\gamma-1}V\left(\frac{p}{m}\frac{dm}{d\theta} + \frac{p}{T}\frac{dT}{d\theta} - \frac{p}{V}\frac{dV}{d\theta}\right) + \frac{\gamma}{\gamma-1}p\frac{dV}{d\theta}$$

Avec :
Q la quantité d'énergie présente dans les gaz de la chambre de combustion ;
θ l'angle du vilebrequin ;
γ le rapport des chaleurs spécifiques ($c_p$ et $c_v$) ;
V le volume de la chambre de combustion ;
p la pression dans la chambre de combustion ;
m la masse de gaz enfermés dans la chambre; et
T la température dans la chambre de combustion.

**7.** Procédé selon la revendication 5, dans lequel on a :

$$\frac{dQ}{d\theta} = \frac{V}{\gamma-1}\left(\frac{p}{T}\frac{dT}{d\theta}\right) + p\frac{dV}{d\theta}$$

Avec :

Q la quantité d'énergie présente dans les gaz de la chambre de combustion ;
$\theta$ l'angle du vilebrequin ;
$\gamma$ le rapport des chaleurs spécifiques ($c_p$ et $c_v$) ;
V le volume de la chambre de combustion ;
p la pression dans la chambre de combustion ; et
T la température dans la chambre de combustion.

**8.** Procédé selon l'une des revendications 5 à 7, dans lequel

$$T_\theta = T_0 \frac{p_\theta V_\theta}{p_0 V_0}$$

avec $T_0$, $P_0$, $V_0$ les température, pression et volume initiaux.

**9.** Procédé selon l'une des revendications 5 à 7, dans lequel

$$T_\theta = T_{\theta-\Delta\theta}\left(\frac{1}{\dfrac{p_{\theta-\Delta\theta}}{p_\theta} + \dfrac{V_{\theta-\Delta\theta}}{V_\theta} - 1}\right).$$

**10.** Procédé selon les revendications 7 et 9, dans lequel

$$C_\theta = \frac{1}{\gamma-1}\left(\frac{p_\theta}{T_\theta}\frac{T_\theta - T_{\theta-\Delta\theta}}{\Delta\theta}\right) + \frac{p_\theta}{V_\theta}\frac{V_\theta - V_{\theta-\Delta\theta}}{\Delta\theta}.$$

**11.** Procédé selon l'une des revendications 5 à 10, dans lequel le volume est tiré d'une table de valeurs donnant le volume V et sa dérivée temporelle pour chaque valeur d'angle du vilebrequin.

**12.** Procédé selon l'une des revendications 5 à 11, dans lequel le calcul du volume vrai V est remplacé par une approximation Vp suivant une loi parabolique donnée par l'expression :

$$V_p(\theta) = V_0 + K_p\theta^2$$

où :

$V_0$ est constant et est le volume de la chambre au point mort haut (PMH),
$K_p$ un coefficient à ajuster de telle façon que la courbe de $V_p$ soit au plus près de la courbe de V au voisinage du point mort haut.

**13.** Procédé selon l'une des revendications 1 à 12, dans lequel le premier seuil (S1) et le deuxième seuil (S2) sont fixes ou issus d'une cartographie fonction de la charge du moteur ou de la quantité de carburant injectée.

**14.** Procédé selon l'une des revendications 1 à 13, comportant, dans le cas d'un moteur à au moins deux injections de quantités injectées différentes dans la chambre, une étape consistant à détecter séparément le début de combustion de chacune des injections.

**15.** Procédé selon la revendication 14, dans lequel la détection de chaque début de combustion s'effectue en multipliant les détections et en appliquant des seuils différents chaque détection.

**16.** Procédé selon la revendication 14, dans lequel la détection de chaque début de combustion s'effectue en multipliant les détections, et en déterminant si la différence entre la deuxième valeur ($C_\theta$) de la variable caractéristique et la première valeur ($C_{\theta-\Delta\theta}$) de la variable caractéristique pour l'injection de plus grande quantité est supérieure à un deuxième seuil (S2).

**17.** Procédé selon la revendication 16, dans lequel le deuxième seuil (S2) est identique pour chaque détection.

**18.** Procédé selon la revendication 14, dans lequel la détection de chaque début de combustion s'effectue en appliquant deux seuils pour l'injection de plus faible quantité, et un seuil unique à l'injection de plus grande quantité.

**19.** Véhicule comportant un indicateur d'un début d'une combustion dans une chambre (3) à combustion,
le véhicule comportant un moteur à combustion interne,
le moteur comportant au moins un cylindre et un vilebrequin (8) monté à rotation dans le moteur,
le cylindre comportant une chambre de combustion (3) et un piston (5), le piston (5) étant relié au vilebrequin (8) et étant mobile entre un point mort haut (PMH) et un point mort bas (PMB),
**caractérisé en ce qu'**il comporte un boîtier électronique (7) comportant:

a) un calculateur (71) d'au moins deux valeurs d'une variable ($C_\theta$, $C_{\theta-\Delta\theta}$) caractéristique de la combustion dans la chambre (3) de combustion, la variable caractéristique étant notamment une fonction de l'énergie dégagée dans la chambre (3), une première valeur ($C_{\theta-\Delta\theta}$) étant calculée pour un premier angle ($\theta-\Delta\theta$) de rotation du vilebrequin (8) ou un premier instant (t-$\Delta$t), une deuxième valeur ($C_\theta$) étant calculée pour un deuxième angle de rotation ($\theta$) du vilebrequin (8) ou un deuxième instant (t);
b) un comparateur (72) pour déterminer si la deuxième valeur ($C_\theta$) de la variable caractéristique dépasse un premier seuil (S1) ;
c) un différenciateur (74) pour calculer la différence entre la deuxième valeur ($C_\theta$) de la variable caractéristique et la première valeur ($C_{\theta-\Delta\theta}$) de la variable caractéristique ; et
d) un comparateur (73) pour déterminer si la différence est inférieure à un deuxième seuil (S2),

le début de la combustion étant déterminé si les conditions déterminées par les comparateurs (72, 73) sont vérifiées.

**20.** Véhicule selon la revendication 19, dans lequel le moteur comporte en outre :

- un détecteur (9) de l'angle du vilebrequin (8) ; et
- un capteur (4) de la pression dans la chambre (3) de combustion.

## FIG.1

## FIG.2

Fonction "triangle"

## FIG.3

## FIG.4

dQ/dt

1/V*dQ/dt

FIG.5

Volumes V et Vp

Volume vrai
Vp (loi parabolique)

Theta

FIG.6

C calculé avec V

## FIG.7

C calculé avec Vp

## FIG.8

pression
chambre $P_\theta$

angle
vilebrequin

$\theta$ → Calcul du
volume ou de
son substitut
parabolique

$V_\theta$ → Calcul de la
température

$T_\theta$ et $T_{\theta-\Delta\theta}$

Calcul de C → $C_\theta$

$V_\theta$ et $V_{\theta-\Delta\theta}$

## FIG.9

71

$\dfrac{1}{z}$ → $-74+$ → ABS → $\leq$ 73

$S2$

1/V dg/dt

$\underline{C}$

72 → $\geq$ → AND 75

$S1$ → 

= 1 → SOC détecté
= 0 → pas SOC détecté

7

Sous système SUB1

## FIG.10

① C → 7 → ①
DETECTION SOC
INJECTION PILOTE

= 1 COMB. INJECTION PILOTE DETECTEE
= 0 COMB. INJECTION PILOTE NON DETECTEE

7 → ②
DETECTION SOC
INJECTION PRINCIPALE

= 1 COMB. INJECTION PRINCIPALE DETECTEE
= 0 COMB. INJECTION PRINCIPALE NON DETECTEE

## FIG.11

**Office européen**
**des brevets**

**RAPPORT DE RECHERCHE EUROPEENNE**

Numéro de la demande

EP 07 30 1313

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 300 588 A (AVL LIST GMBH [AT]) 9 avril 2003 (2003-04-09) * le document en entier * ----- | 1-20 | INV. F02D35/02 F02D41/14 G01M15/08 |
| A | DE 10 2004 033072 A1 (BOSCH GMBH ROBERT [DE]) 28 juillet 2005 (2005-07-28) * abrégé * * alinéas [0002], [0004] - [0007] * * alinéas [0023], [0028], [0030] - [0032] * ----- | 1-20 | |
| A | US 2003/010101 A1 (ZUR LOYE ET AL.) 16 janvier 2003 (2003-01-16) * abrégé * * alinéas [0005], [0013], [0017] - [0021] * * alinéas [0049] - [0051], [0053], [0067] - [0090] * * alinéas [0096], [0097] * ----- | 1-20 | |
| D,A | US 5 359 883 A (BALDWIN DARRYL D [US] ET AL) 1 novembre 1994 (1994-11-01) * colonne 1, ligne 15 - colonne 2, ligne 5 * ----- | 1-120 | DOMAINES TECHNIQUES RECHERCHES (IPC) F02D G01M |
| D,A | WO 02/25237 A (SCANIA CV AB [SE]; JAERGENSTEDT MATS [SE]; NORDIN MIKAEL [SE]; PETTERS) 28 mars 2002 (2002-03-28) * abrégé * ----- | 1-20 | |

Le présent rapport a été établi pour toutes les revendications

| Lieu de la recherche | Date d'achèvement de la recherche | Examinateur |
|---|---|---|
| Munich | 31 octobre 2007 | Wettemann, Mark |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 30 1313

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-10-2007

| Document brevet cité au rapport de recherche | | Date de publication | Membre(s) de la famille de brevet(s) | | Date de publication |
|---|---|---|---|---|---|
| EP 1300588 | A | 09-04-2003 | AUCUN | | |
| DE 102004033072 | A1 | 28-07-2005 | AUCUN | | |
| US 2003010101 | A1 | 16-01-2003 | AUCUN | | |
| US 5359883 | A | 01-11-1994 | AUCUN | | |
| WO 0225237 | A | 28-03-2002 | AU | 8820301 A | 02-04-2002 |
| | | | DE | 10196662 T0 | 21-08-2003 |
| | | | SE | 517008 C2 | 02-04-2002 |
| | | | SE | 0003396 A | 23-03-2002 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0248522 A1
- US 5359883 A
- US 20030145829 A

- WO 0225237 A
- FR 2857410